# EUROPEAN PATENT APPLICATION

(11) **EP 4 412 016 A1**
(43) Date of publication of application: **07.08.2024**
(21) Application number: 23154420.6
(22) Date of filing: 01.02.2023
(51) Int. Cl.: H02G 11/00, B60L 53/30, H01B 7/06, B65H 75/44

(54) **ELECTRIC CHARGING STATION FOR ELECTRIC VEHICLES AND METHOD OF CHARGING AN ELECTRIC VEHICLE**

(71) Applicant: ABB E-mobility B.V., 2629 JG Delft (NL)
(72) Inventor: HERDZINA, Maciej, 31-580 Krakow (PL); CIECIORKO, Marcin, 31-038 Krakow (PL); JURASZ, Konrad, 34480 Jablonka (PL)
(74) Representative: Zimmermann & Partner Patentanwälte mbB

(57) **Abstract**

An electric charging station (10) for electric vehicles is described. The electric charging station (10) includes a charging connector (12) connected to a power supply (16) via a charging cable (11) and a fastening system (13) for fastening the charging connector (12) and the charging cable (11). When the charging connector (12) is fastened to the fastening system (13) a portion of the charging cable (11) forms a loop (111). Further, the electric charging station (10) includes a spring balancer (14) arranged above the fastening system (13). The fastening system (13) is connected with the spring balancer (14). Additionally, the fastening system (13) includes a pulling line (15) connected with the fastening system (13). Further, a method of charging an electric vehicle is described.

## Description

### TECHNICAL FIELD

Embodiments of the present disclosure relate to charging stations for electric vehicles and methods of charging an electric vehicle. In particular, embodiments of the present disclosure relate to charging stations and methods for electric busses and trucks.

### BACKGROUND

Electric and hybrid-electric vehicles are an alternative mode of transport to petrol and diesel engine vehicles. These vehicles use an electric motor as a main or an auxiliary driving mechanism, and incorporate a rechargeable battery to power the electric motor. Recent advancements in electric vehicle technology have led to electric vehicles with increased range and speed, which has contributed to an increase in the popularity of electric vehicle ownership. As an increased number of vehicle manufacturers begin to produce electric vehicles, electric vehicle ownership appears set to become commonplace.

Electric vehicles are generally recharged by connecting the electric vehicle to a specialized charging apparatus (which may be referred to as a charging station or a charging point), which includes a charging connector which couples with a charging port on the vehicle and delivers power to recharge the vehicle's battery. The charging stations generally draw electricity from the main power grid, and are therefore provided in locations electrically connected to the main power grid. For example, electric vehicle charging stations may be provided at service stations, shopping or leisure venues, or may be provided at the user's home. Electric vehicle recharging is currently much slower than refilling a petrol or diesel vehicle with fuel, and may require a user to recharge their electric vehicle for a long time, for example overnight.

A common problem associated with recharging electric vehicles is related to the cables that connect the charging connector to an electricity source. These cables may present obstructions if they are run from a charging station to an electric vehicle across an access way or may be at risk of damage. Further, there is a need to provide flexibility over the location of the charging connector to accommodate different sizes and shapes of vehicles, particularly transport vehicles such as trucks and busses, which may be parked in different orientations.

Accordingly, in view of the above, there is a demand for improved electric charging stations and methods of charging an electric vehicle which at least partially overcome the problems of the state of the art.

### SUMMARY

In light of the above, an electric charging station for electric vehicles and a method of charging an electric vehicle according to the independent claims are provided. Further aspects, advantages, and features are apparent from the dependent claims, the description, and the accompanying drawings.

According to an aspect of the present disclosure, an electric charging station for electric vehicles is provided. The electric charging station includes a charging connector connected to a power supply via a charging cable and a fastening system for fastening the charging connector and the charging cable. When the charging connector is fastened to the fastening system a portion of the charging cable forms a loop. Further, the electric charging station includes a spring balancer arranged above the fastening system. The fastening system is connected with the spring balancer. Additionally, the fastening system includes a pulling line connected with the fastening system.

Accordingly, beneficially an electric charging station for electric vehicles is provided which is improved compared to the state of the art. In particular, the electric charging station of the present disclosure is beneficially configured for various kinds of vehicles, particularly various kinds of trucks and busses. Moreover, by providing a retracting system for an overhang charging cable including a fastening system to which the charging connector and the charging cable may be fixed in one place above the charging spot, the handling of the charging connector with the charging cable before starting the charging process is facilitated. Further, the electric charging station of the present disclosure is beneficially configured such that the charging cable and the charging connector can be retracted up to a safe position when not used. Accordingly, the overall safety is improved.

According to another aspect of the present disclosure, a method of charging an electric vehicle is provided. The method includes pulling down a fastening system connected to a spring balancer arranged above the fastening system. A charging connector and a charging cable are fastened to the fastening system. Additionally, the method includes detaching the charging connector from the fastening system. Further, the method includes connecting the charging connector with a socket of the electric vehicle.

### BRIEF DESCRIPTION OF THE DRAWINGS

So that the manner in which the above recited features of the present disclosure can be understood in detail, a more particular description of the disclosure, briefly summarized above, may be had by reference to embodiments. The accompanying drawings relate to embodiments of the disclosure and are described in the following:
- Fig. 1: shows a schematic view of an electric charging station according to embodiments described herein; and
- Fig. 2: shows a block diagram for schematically illustrating a method of charging an electric vehicle according to embodiments described herein .

### DETAILED DESCRIPTION OF EMBODIMENTS

Reference will now be made in detail to the various embodiments, one or more examples of which are illustrated in each figure. Each example is provided by way of explanation and is not meant as a limitation. For example, features illustrated or described as part of one embodiment can be used on or in conjunction with any other embodiment to yield yet a further embodiment. It is intended that the present disclosure includes such modifications and variations.

Within the following description of the drawings, the same reference numbers refer to the same or to similar components. Generally, only the differences with respect to the individual embodiments are described. Unless specified otherwise, the description of a part or aspect in one embodiment can apply to a corresponding part or aspect in another embodiment as well.

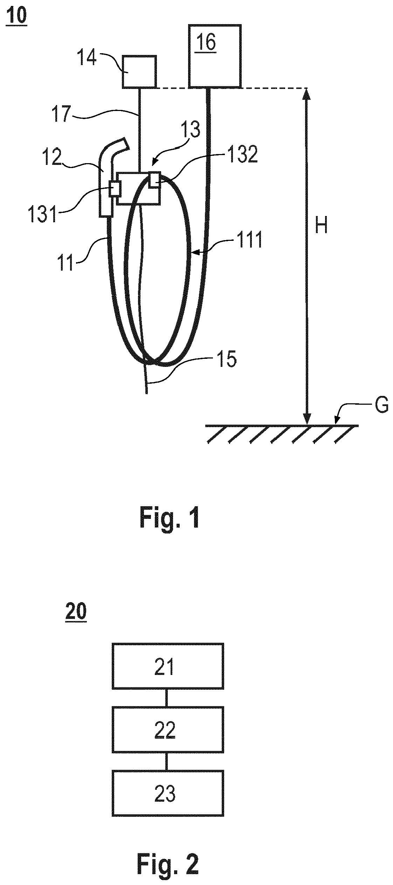

With exemplary reference to Fig. 1, an electric charging station 10 for electric vehicles according to embodiments of the present disclosure are described.

According to embodiments, which can be combined with other embodiments described herein, the electric charging station 10 includes a charging connector 12 connected to a power supply 16 via a charging cable 11. The charging connector may also be referred to as charging gun. It is to be understood, that in a charging process the charging connector is connected with a socket of the electric vehicle and the power for charging the vehicle is provided from the power supply via the charging cable to the vehicle. Additionally, the electric charging station 10 includes a fastening system 13. The fastening system 13 is configured for fastening the charging connector 12 and the charging cable 11. As exemplarily shown in Fig. 1, the fastening system 13 is arranged and configured such that, when the charging connector 12 is fastened to the fastening system 13, a portion of the charging cable 11 forms a loop 111. As exemplarily shown in Fig. 1, typically the loop 111 is formed by a portion of the charging cable 11 between the charging connector 12 and fastening system 13. Typically, the fastening system 13 is arranged and configured such that only one loop, i.e. a single loop, is formed when the charging connector 12 is fastened to the fastening system 13. Further, typically the charging connector 12 includes a dust cap configured for protecting electrical contacts of the charging connector from dust or liquids. Accordingly, contamination of the electrical contacts with dust and/or liquids can be prevented.

Further, as exemplarily shown in Fig. 1, the electric charging station 10 includes a spring balancer 14. A spring balancer can be understood as a device that uses a spring to counterbalance the weight of an object (e.g. here the weight of the fastening system, the weight of the charging connector and the weight of the charging cable) allowing it to be suspended in a fixed position without the need for manual support. The spring balancer typically includes a cable or rope connected to the object at one end and to a springloaded mechanism at the other end. The spring is adjusted to provide the necessary counterbalance force to hold the object in place. Further, typically the spring balancer includes a brake or locking mechanism for holding the object in a specific position. Accordingly, it is to be understood that typically the spring balancer 14 is a passive mechanical retracting system.

As exemplarily shown in Fig. 1, the spring balancer 14 is arranged above the fastening system 13. The fastening system 13 is connected with the spring balancer 14. For instance, the fastening system 13 can be connected with the spring balancer 14 via a rope 17, a cable, a wire or via any other suitable connection means. Moreover, the electric charging station 10 includes a pulling line 15 connected with the fastening system 13. The pulling line may be a rope, a cable, a wire or any other suitable means suitable for pulling the fastening system 13 towards the ground, particularly by hand.

Accordingly, beneficially an electric charging station for electric vehicles is provided which is improved compared to the state of the art. In particular, the electric charging station of the present disclosure is beneficially configured for various kinds of vehicles, particularly various kinds of trucks and busses. Moreover, by providing a retracting system (i.e. the spring balancer 14 as described herein) for an overhang charging cable including a fastening system to which the charging connector and the charging cable may be fixed in one place above the charging spot, the handling of the charging connector with the charging cable before starting the charging process is facilitated. Further, the electric charging station of the present disclosure is beneficially configured such that the charging cable and the charging connector can be retracted up to a safe position when not used. Accordingly, the overall safety is improved.

According to embodiments, which can be combined with other embodiments described herein, the fastening system 13 includes a first fixation 131 for detachably fastening the charging connector 12 to the fastening system 13. In other words, the first fixation 131 is configured such that the charging connector 12 can be fixed to the fastening system 13 and, when needed, can be removed for charging. For instance, the first fixation 131 can be configured as a plug connection. Accordingly, for fastening the charging connector 12 to the fastening system 13, a connection element of the charging connector 12 may be plugged into a corresponding complementary connection element of the first fixation 131.

According to embodiments, which can be combined with other embodiments described herein, the fastening system 13 comprises a second fixation 132 configured for adjusting a length of the charging cable 11 between the second fixation 132 and the charging connector 12. Typically, the length of the charging cable 11 between the second fixation 132 and the charging connector 12 is adjusted once when the electric charging station is installed. Accordingly, during the charging process the length of the charging cable 11 between the second fixation 132 and the charging connector 12 is fixed, i.e. does not change. The length of the charging cable 11 between the second fixation 132 and the charging connector 12 may be selected depending on the mounting level of the power supply 16 above ground level.

According to embodiments, which can be combined with other embodiments described herein, the spring balancer 14 is provided at a height H of 3 m ≤ H ≤ 6 m above ground level G. In particular, the spring balancer can be provided at a height H of 4.5 m ≤ H ≤ 5.5 m above ground level G. Further, as exemplarily shown in Fig. 1, the power supply 16 may be provided at a height H of 3 m ≤ H ≤ 6 m, particularly H of 4.5 m ≤ H ≤ 5.5, above ground level G. The height at which the spring balancer 14 is provided may be equal to or different from the height at which the power supply 16 is provided. As an example, Fig. 1 shows an embodiment in which the spring balancer 14 and the power supply 16 are arranged at the same height H above ground level G.

With exemplary reference to the block diagram of Fig. 2, a method 20 of charging an electric vehicle according to embodiments of the present disclosure are described. According to embodiments, which can be combined with other embodiments described herein, the method 20 includes pulling down (represented by block 21 in Fig. 2) a fastening system 13 connected to a spring balancer 14 arranged above the fastening system 13. As exemplarily described with reference to Fig. 1, a charging connector 12 and a charging cable 11 are fastened to the fastening system 13. The charging connector 12 is detachably fastened to the fastening system 13. Accordingly, it is to be understood, that pulling down typically includes using the pulling line 15, as exemplarily described with reference to Fig. 1, for pulling down the fastening system 13, the charging connector 12 and the charging cable 11. Additionally, the method includes detaching (represented by block 22 in Fig. 2) the charging connector 12 from the fastening system 13. Further, the method 20 includes connecting (represented by block 23 in Fig. 2) the charging connector 12 with a socket of the electric vehicle.

It is to be understood, that typically the pulling line 15, as exemplarily described with reference to Fig. 1, is used for pulling down the fastening system 13, the charging connector 12 and the charging cable 11,

In view of the embodiments described herein, it is to be understood that compared to the state of the art an improved electric charging station and an improved method of charging an electric vehicle are provided. In particular, embodiments of the present disclosure are suitable for various kinds of vehicles, particularly various kinds of trucks and busses. More specifically, embodiments of the present disclosure beneficially provide for facilitated handling of the charging connector with the charging cable and improved safety. In particular, by providing a retracting system for an overhang charging cable as described herein, the components in the charging area can be gathered and organized in a place above the charging spot which rises the safety.

While the foregoing is directed to embodiments, other and further embodiments may be devised without departing from the basic scope, and the scope is determined by the claims that follow.

### REFERENCE NUMBERS

- 10: charging station
- 11: charging cable
- 111: loop
- 12: charging connector
- 13: fastening system
- 131: first fixation
- 132: second fixation
- 14: spring balancer
- 15: pulling line
- 16: power supply
- 17: rope/cable/wire
- H: height
- G: ground level

## Claims

1. An electric charging station (10) for electric vehicles, comprising:
- a charging connector (12) connected to a power supply (16) via a charging cable (11);
- a fastening system (13) for fastening the charging connector (12) and the charging cable (11), wherein when the charging connector (12) is fastened to the fastening system (13) a portion of the charging cable (11) forms a loop (111),
- a spring balancer (14) arranged above the fastening system (13), the fastening system (13) being connected with the spring balancer (14); and
- a pulling line (15) connected with the fastening system (13).

2. The electric charging station (10) of claim 1, wherein the loop (111) is formed by a portion of the charging cable (11) between the charging connector (12) and fastening system (13).

3. The electric charging station (10) of claim 1 or 2, wherein the loop (111) is a single loop.

4. The electric charging station (10) of any of claims 1 to 3, wherein the fastening system (13) comprises a first fixation (131) for detachably fastening the charging connector (12) to the fastening system (13).

5. The electric charging station (10) of any of claims 1 to 4, wherein the fastening system (13) comprises a second fixation (132) configured for adjusting a length of the charging cable (11) between the second fixation (132) and the charging connector (12).

6. The electric charging station (10) of any of claims 1 to 5, wherein the spring balancer (14) is provided at a height H of 3 m ≤ H ≤ 6 m above ground level.

7. A method of charging an electric vehicle, comprising:
- pulling down a fastening system (13) connected to a spring balancer (14) arranged above the fastening system (13), wherein a charging connector (12) and a charging cable (11) are fastened to the fastening system (13),
- detaching the charging connector (12) from the fastening system (13); and
- connecting the charging connector (12) with a socket of the electric vehicle.

8. The method of claim 1, comprising using an electric charging station (10) according to any of claims 1 to 6.
